# FASCICULE DE BREVET EUROPEEN

(11) **EP 1 881 181 B1**
(45) Date de publication et mention de la délivrance du brevet: **13.12.2017**
(21) Numéro de dépôt: 07290843.7
(22) Date de dépôt: 04.07.2007
(51) Int. Cl.: F01D 5/04, F02C 7/18, F02C 3/08

(54) **Turbomachine**
Strömungsmaschine
Turbomachine

(30) Priorité: 19.07.2006 FR 0606543
(43) Date de publication de la demande: 23.01.2008
(73) Titulaire: SNECMA, 75015 Paris (FR)
(72) Inventeur: Argaud, Thierry, 77590 Chartrettes (FR); Brunet, Antoine Robert Alain, 77550 Moissy Cramayel (FR); Leininger, Jean-Christophe, 91300 Massy (FR)
(74) Mandataire: Ramey, Daniel

(56) Documents cités:
- GB-A- 2 401 912
- US-A- 3 199 294
- US-A- 4 277 222
- US-A- 5 996 331
- US-A- 6 000 906
- US-A1- 2004 244 403
- US-A1- 2007 110 566
- US-B1- 6 257 834

## Description

La présente invention concerne la ventilation d'une cavité aval de rouet de compresseur centrifuge dans une turbomachine, telle notamment qu'un turboréacteur ou un turbopropulseur d'avion.

Les documents US-B1-6 257 834 et US-A-4 277 222 décrivent des joints d'étanchéité du type à labyrinthe montés en sortie d'un compresseur centrifuge d'une turbomachine.

Le document US-A-3 199 294 décrit une turbomachine comportant une turbine centripète.

Le document US-A-5 996 331 décrit une cavité aval d'un rouet de compresseur centrifuge d'une turbomachine.

La cavité annulaire qui est formée en aval du rouet d'un compresseur centrifuge dans une turbomachine doit être ventilée pour évacuer l'énergie thermique apportée par le rouet. Cette ventilation se fait en général par prélèvement d'air en sortie du compresseur, à la jonction avec l'entrée d'un diffuseur annulaire qui alimente une chambre de combustion.

Ce diffuseur comporte un flasque annulaire aval à section axiale sensiblement en L dont la partie amont sensiblement radiale s'étend, avec un faible jeu axial, le long de la face aval du rouet, et dont la partie aval est sensiblement cylindrique. L'air prélevé en sortie du compresseur s'écoule de l'extérieur vers l'intérieur dans l'espace annulaire radial formé entre le rouet et la partie radiale du flasque du diffuseur puis passe dans la cavité aval du rouet.

En fonctionnement, l'air dans la cavité est soumis à des forces centrifuges importantes et est entraîné par la rotation du rouet ce qui provoque une zone de recirculation d'air dans la cavité et une remontée d'une partie de cet air le long de la face aval du rouet, de l'intérieur vers l'extérieur. Cet air s'échauffe par frottement visqueux sur la face aval du rouet et se mélange à l'air prélevé sortant du compresseur, en augmentant la température de cet air. Par convection, cet air réchauffe encore la face aval du rouet, qui peut atteindre et dépasser une valeur maximale admissible, ce qui se traduit par un fluage de matière.

L'invention a notamment pour but d'apporter une solution simple, efficace et économique à ce problème de la technique antérieure.

Elle propose à cet effet une turbomachine, comprenant un compresseur centrifuge et un diffuseur annulaire agencé en sortie du compresseur, le diffuseur comportant un flasque annulaire aval à section sensiblement en L qui s'étend en aval du rouet du compresseur et qui délimite avec une face radiale aval du rouet une cavité annulaire ventilée par prélèvement d'air en sortie du compresseur, l'air prélevé circulant dans la cavité vers l'aval et vers l'axe de rotation du compresseur, au moins un déflecteur annulaire étant monté dans cette cavité et s'étendant entre la face aval du rouet et le flasque annulaire aval du diffuseur pour provoquer l'entraînement de l'air chaud dévié vers l'aval, caractérisée en ce que:
- elle comporte un bouclier annulaire de protection thermique recouvrant la face aval du rouet, et en ce que
- la cavité annulaire définit une zone de recirculation pour l'air,
- et, pour s'opposer, au-delà du déflecteur annulaire, à une remontée d'air échauffé le long de la face aval du rouet, le déflecteur est situé radialement au niveau de la jonction entre une partie radiale amont et une partie cylindrique aval du flasque annulaire du diffuseur, ou le déflecteur est formé en saillie sur ledit bouclier annulaire de protection thermique, ce déflecteur s'étendant vers l'aval jusqu'à proximité du flasque du diffuseur.

Le déflecteur annulaire selon l'invention empêche la remontée d'air chaud le long de la face aval du rouet et forme une réduction de la section de passage de l'air prélevé en sortie du compresseur, pour accélérer cet air et provoquer un cisaillement de l'air plus chaud qui a remonté le long de la face radial du rouet et qui a été dévié par le déflecteur, et un entraînement de cet air plus chaud le long de la partie cylindrique du flasque annulaire du diffuseur.

Selon une autre caractéristique de l'invention, le déflecteur est situé radialement au niveau de la jonction entre une partie radiale et une partie cylindrique du flasque annulaire aval du diffuseur.

C'est à ce niveau que le déflecteur est le plus efficace, en termes de déviation de l'air plus chaud qui a remonté le long de la face aval du rouet, de cisaillement et d'entraînement de cet air plus chaud par l'air prélevé en sortie du compresseur.

Dans un mode de réalisation de l'invention, le déflecteur est formé en saillie sur la face aval du rouet et a une forme sensiblement cylindrique. Préférentiellement, ce déflecteur s'étend axialement jusqu'à proximité du flasque annulaire aval du diffuseur, et a une dimension axiale supérieure ou égale à l'épaisseur de la couche d'air chaud remontant le long du rouet. Cet air chaud est dévié vers l'aval par le déflecteur du rouet puis est entraîné par l'air prélevé en sortie du compresseur et qui passe entre le déflecteur et le flasque du diffuseur.

Dans une variante de réalisation de l'invention, le déflecteur est formé en saillie sur le flasque annulaire du diffuseur et s'étend axialement vers l'amont jusqu'à proximité du rouet. Ce déflecteur est préférentiellement formé à la jonction entre la partie radiale et la partie cylindrique du flasque du diffuseur.

L'air qui s'écoule depuis la sortie du compresseur entre la face aval du rouet et le déflecteur du flasque empêche l'air plus chaud de remonter le long de cette face aval.

Dans une autre variante, un premier déflecteur est formé en saillie sur la face aval du rouet et un second déflecteur est formé en saillie sur le flasque annulaire aval du diffuseur, ces déflecteurs s'étendant l'un vers l'autre et délimitant entre eux un passage annulaire de sortie de l'air prélevé en sortie du compresseur. Préférentiellement, le déflecteur formé sur le rouet est situé radialement à l'intérieur du déflecteur formé sur le flasque annulaire du diffuseur.

Dans encore une autre variante, le déflecteur est formé en saillie sur un bouclier annulaire de protection thermique recouvrant la face aval du rouet et tournant avec le rouet, ce déflecteur s'étendant vers l'aval jusqu'à proximité du flasque du diffuseur. Ce déflecteur est préférentiellement situé au niveau de la jonction entre les parties radiale et cylindrique du flasque du diffuseur.

Le déflecteur peut avoir une forme carrée, rectangulaire ou triangulaire en section axiale.

L'invention sera mieux comprise et d'autres détails, caractéristiques et avantages de la présente invention apparaîtront à la lecture de la description suivante faite à titre d'exemple non limitatif et en référence aux dessins annexés, dans lesquels :
- la figure 1 est une demi-vue schématique en coupe axiale d'un système de ventilation selon la technique antérieure;
- la figure 2 est une vue schématique partielle en coupe axiale d'un système de ventilation selon l'invention ;
- la figure 3 est une vue correspondant à la figure 2 et représente une variante de réalisation de l'invention ;
- la figure 4 est une vue correspondant à la figure 2 et représente une variante de l'invention ;
- la figure 5 est une vue correspondant à la figure 2 et représente encore une autre variante de l'invention ;

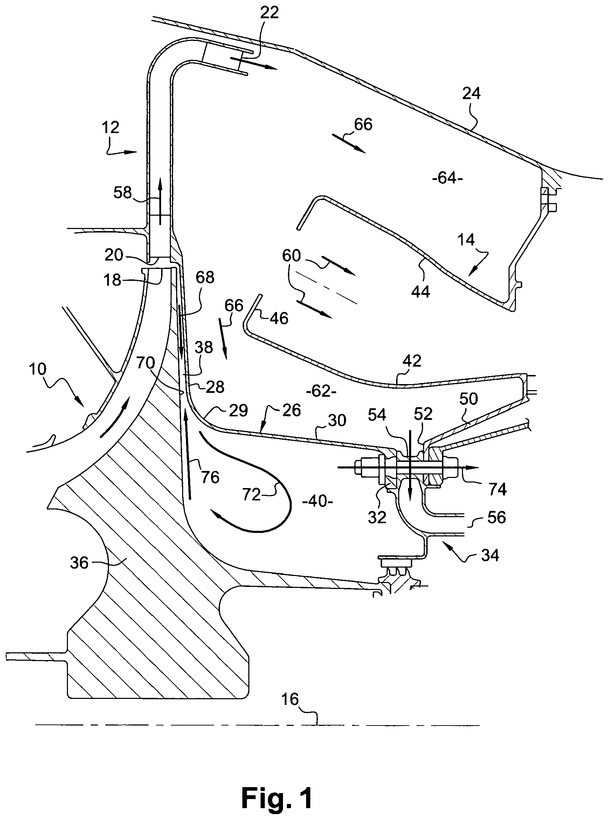

La figure 1 représente une partie d'une turbomachine, telle qu'un turboréacteur ou un turbopropulseur d'avion, comportant d'amont en aval, dans le sens de l'écoulement des gaz à l'intérieur de la turbomachine, un étage centrifuge de compresseur 10, un diffuseur 12 et une chambre de combustion 14.

L'entrée de l'étage de compresseur 10 est orientée vers l'amont, sensiblement parallèlement à l'axe 16 de la turbomachine, et sa sortie 18 est orientée radialement vers l'extérieur, sensiblement perpendiculairement à l'axe 16 de la turbomachine.

Le diffuseur 12 a une forme annulaire coudée à 90° et comprend une entrée 20 alignée avec la sortie 18 du compresseur, et une sortie 22 qui est orientée vers l'aval et débouche radialement à l'extérieur de la chambre de combustion 14.

Le diffuseur 12 est porté par un carter externe 24 qui entoure extérieurement le compresseur 10, le diffuseur 12 et la chambre de combustion 14.

Le diffuseur 12 comprend un flasque annulaire aval 26 à section sensiblement en L qui comporte une partie amont 28 sensiblement radiale qui s'étend vers l'intérieur depuis l'entrée 20 du diffuseur 12, et une partie aval 30 sensiblement cylindrique qui se termine à son extrémité aval par une bride annulaire 32 fixée par des moyens appropriés du type vis-écrou sur des moyens 34 d'injection d'air de ventilation et/ou refroidissement de composants (notamment de turbine) situés en aval de la chambre de combustion 14.

La jonction 29 entre les parties radiale 28 et cylindrique 30 du flasque a une forme arrondie en section axiale et comprend une surface annulaire concave orientée vers l'aval et vers l'extérieur et une surface annulaire convexe orientée vers l'amont et vers l'intérieur.

La partie radiale 28 du flasque 26 s'étend, avec un jeu axial faible, en aval et le long du rouet 36 du compresseur, ce jeu axial augmentant légèrement en direction de l'axe 16 de rotation du rouet et étant maximal au niveau de la jonction 29 précitée du flasque.

Le flasque 26 délimite avec une face radiale aval 70 du rouet 36 une cavité annulaire 40 qui communique avec la sortie du compresseur par l'espace annulaire radial 38 formé entre le rouet 36 et la partie radiale 28 du flasque.

La chambre de combustion 14 comporte deux parois de révolution coaxiales 42, 44 s'étendant l'une à l'intérieur de l'autre et reliées à leurs extrémités amont à une paroi 46 de fond de chambre, ces parois 42, 44 et 46 délimitant entre elles une enceinte annulaire dans laquelle du carburant est amené par des injecteurs.

La paroi radialement externe 44 de la chambre est fixée à son extrémité aval au carter externe 24, et sa paroi radialement interne 42 est reliée à son extrémité aval à une virole tronconique 50 qui comporte à son extrémité radialement interne une bride annulaire interne 52 de fixation sur les moyens d'injection 34 précités.

Ces moyens d'injection 42 comprennent un conduit annulaire coudé à angle droit dont l'entrée 54 débouche radialement vers l'extérieur et est située en aval de la bride 32 du flasque et en amont de la bride 52 de la virole 50, et dont la sortie 56 est orientée vers l'aval et est située radialement à l'intérieur de la virole 50.

La majeure partie du débit d'air sortant de l'étage de compresseur 10 passe dans le diffuseur 12 (flèche 58) et alimente la chambre de combustion 14 (flèches 60) et des veines annulaires interne 62 et externe 64 de contournement de la chambre de combustion 14 (flèches 66), la veine interne 62 alimentant les moyens d'injection 34.

Une petite partie du débit d'air sortant du compresseur centrifuge 10 (flèche 68) passe dans l'espace radial 38 formé entre le rouet 36 du compresseur et la partie radiale 28 du flasque 26 du diffuseur pour ventiler la cavité aval 40 du rouet et y éviter une accumulation de chaleur produite par frottement visqueux de l'air entraîné par la rotation du rouet.

L'air de ventilation est évacué (flèche 74) vers l'aval par des orifices prévus sur les brides 32 et 52 du flasque 26 et de la virole 50 et alignés avec des orifices correspondants prévus sur les moyens d'injection 34.

En fonctionnement, une zone 72 de recirculation d'air se crée dans la cavité 40 sous l'effet des forces centrifuges et de la rotation du rouet. Une partie de cet air remonte (flèche 76) le long du rouet 36, de l'intérieur vers l'extérieur et s'échauffe par frottement visqueux sur la face aval 70 du rouet. Cet air chaud 76 se mélange à l'air 68 prélevé en sortie du compresseur et augmente sa température, ce mélange d'air pouvant par convection élever la température de la face aval du rouet, ce qui représente un risque de détérioration du rouet.

L'invention apporte une solution à ce problème grâce à au moins un déflecteur annulaire qui s'étend autour de l'axe 16 de rotation du rouet, entre le flasque 26 du diffuseur et le face aval 70 du rouet, et qui permet de dévier vers l'aval l'air chaud remontant le long de cette face.

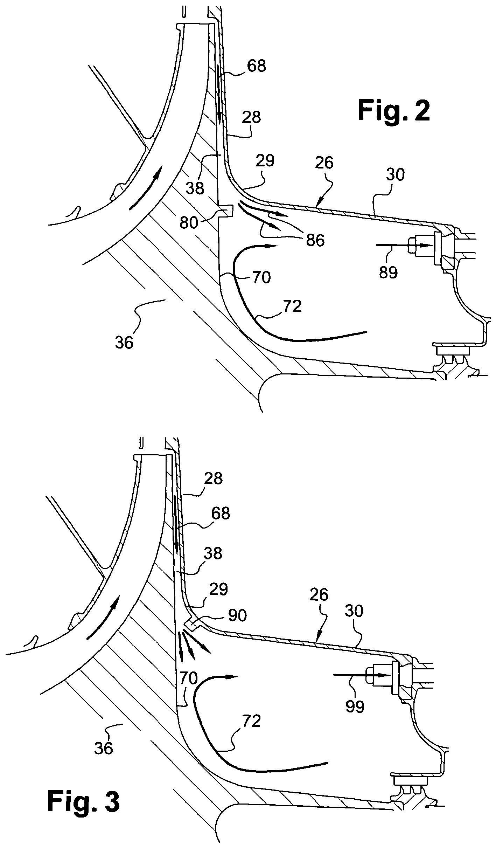

Dans le mode de réalisation de la figure 2, le déflecteur 80 est formé en saillie sur la face aval 70 du rouet 36 et est situé radialement au niveau de la jonction 29 entre les parties radiale 28 et cylindrique 30 du flasque 26.

Le déflecteur 80 a une forme par exemple carrée en section axiale et s'étend axialement jusqu'à une distance faible de la jonction 29 du flasque 26, en définissant avec celle-ci un passage annulaire de sortie d'air de l'espace radial 38.

L'air qui sort de l'espace radial 38 à travers ce passage est accéléré et s'écoule autour de l'axe de rotation du compresseur et d'amont en aval le long de la partie cylindrique 30 du flasque (flèches 86). Il entraîne vers l'aval l'air plus chaud qui a remonté le long de la face radiale 70 du rouet et qui a été dévié vers l'aval par le déflecteur 80, puis est ensuite évacué à travers les orifices précités des brides 32, 52 et des moyens d'injection 34 (flèche 89).

Le déflecteur 80 peut être formé d'une seule pièce avec le rouet 36, comme cela est représenté, ou être rapporté et fixé sur la face aval 70 du rouet. La dimension axiale du déflecteur 80 est égale ou supérieure à l'épaisseur de la couche d'air chaud remontant la face aval 70 du rouet afin de dévier vers l'aval la totalité de cette couche d'air. Typiquement, la dimension axiale du déflecteur 80 est de 1 cm environ.

En variante et comme représenté en figure 3, le déflecteur 90 est formé en saillie sur le flasque 26 du diffuseur, au niveau de la jonction 29 du flasque, et s'étend axialement vers l'amont jusqu'à proximité du rouet 36.

Le déflecteur 90 a une forme approximativement carrée en section axiale et se termine à une distance axiale faible de la face aval 70 du rouet, en définissant avec celle-ci un passage annulaire de sortie d'air de l'espace radial 38.

L'air prélevé en sortie du compresseur est accéléré dans ce passage de sortie et s'oppose à la remontée de l'air plus chaud sur la face aval du rouet. Comme représenté en figure 3 par les flèches, cet air plus chaud est dévié par l'air sortant du passage formé entre le rouet et le déflecteur 90 et est entraîné vers les orifices des brides 32, 52 et des moyens d'injection 34 (flèche 99).

Le déflecteur 90 peut être formé d'une seule pièce avec le flasque 26 du diffuseur ou bien être rapporté sur ce flasque.

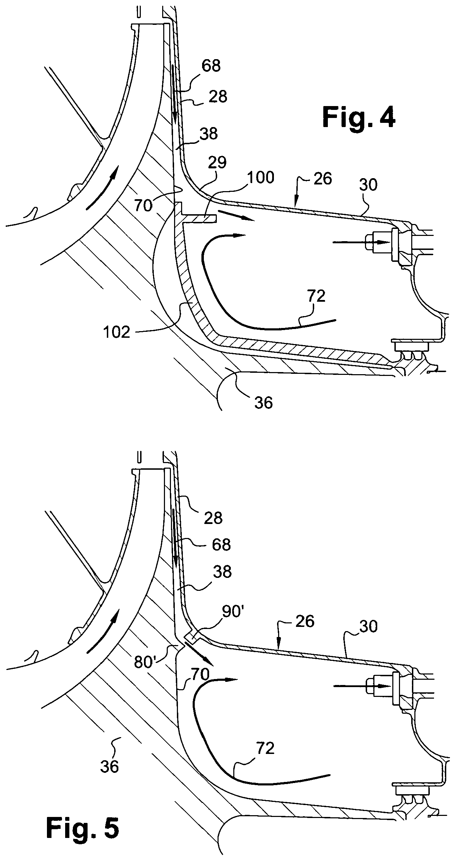

Dans la variante représentée en figure 4, le déflecteur 100 est porté par un bouclier annulaire 102 de protection thermique qui est solidaire en rotation du rouet 36, et qui recouvre la face aval 70 du rouet, l'extrémité radialement externe du bouclier étant située approximativement au niveau de la jonction 29 du flasque.

Le bouclier 102 empêche l'air plus chaud qui circule dans la cavité aval 40 de venir au contact de la face aval du rouet.

Le déflecteur 100 est formé en saillie à proximité de l'extrémité radialement externe du bouclier 102 et s'étend axialement vers l'aval à l'intérieur de la jonction 29 du flasque 26 et à faible distance radiale de celle-ci. Ce déflecteur 100 a une forme par exemple rectangulaire en section axiale et se termine à une distance faible de la jonction 29 du flasque 26, en définissant avec celle-ci un passage annulaire de sortie d'air de l'espace radial 38.

On est donc ramené, pour le fonctionnement de ce système de ventilation, au cas de la figure 2. Le déflecteur 100 peut être rapporté et fixé sur le bouclier 102 ou formé d'une seule pièce avec ce bouclier.

Dans la variante de la figue 5, deux déflecteurs 80', 90' sont portés respectivement par le rouet 36 et le flasque 26 du diffuseur, et définissent entre eux un passage annulaire de sortie d'air de l'espace radial 38, ce qui correspond à une combinaison des modes de réalisation des figures 2 et 3.

Le déflecteur 80' porté par le rouet 36 a une forme triangulaire en section axiale dont le sommet est orienté vers le flasque 26.

Le déflecteur 90' du flasque est sensiblement identique au déflecteur 90 de la figure 3 et s'étend axialement autour du déflecteur 80'. Les fonctionnements des modes de réalisation des figures 2 et 3 sont combinés.

## Revendications

1. Turbomachine, comprenant un compresseur centrifuge (10) et un diffuseur annulaire (12) agencé en sortie du compresseur, le diffuseur comportant un flasque annulaire aval (26) à section sensiblement en L qui s'étend en aval d'un rouet (36) du compresseur et qui délimite avec une face radiale aval (70) du rouet une cavité annulaire (40) ventilée par prélèvement d'air en sortie du compresseur, l'air prélevé circulant dans la cavité vers l'aval et vers l'axe de rotation du compresseur, au moins un déflecteur annulaire (80, 90, 80', 90', 100) étant monté dans cette cavité et s'étendant entre la face aval du rouet et le flasque annulaire aval du diffuseur pour provoquer l'entraînement de l'air chaud dévié vers l'aval, **caractérisée en ce que**:
- elle comporte un bouclier annulaire (102) de protection thermique recouvrant la face aval (70) du rouet, et **en ce que**
- la cavité annulaire (40) définit une zone (72) de recirculation pour l'air,
- et, pour s'opposer, au-delà du déflecteur annulaire (80, 90, 80', 90', 100), à une remontée d'air échauffé le long de la face aval du rouet, le déflecteur est situé radialement au niveau de la jonction entre une partie radiale amont (28) et une partie cylindrique aval (30) du flasque annulaire du diffuseur, ou le déflecteur est formé en saillie sur ledit bouclier annulaire (102) de protection thermique, ce déflecteur s'étendant vers l'aval jusqu'à proximité du flasque (26) du diffuseur.

2. Turbomachine selon la revendication 1, **caractérisée en ce que** le déflecteur annulaire (80) est formé en saillie sur la face aval (70) du rouet et a une forme sensiblement cylindrique.

3. Turbomachine selon la revendication 2, **caractérisée en ce que** le déflecteur annulaire (80) s'étend axialement jusqu'à proximité du flasque annulaire aval du diffuseur.

4. Turbomachine selon la revendication 2 ou 3, **caractérisée en ce que** le déflecteur annulaire (80) a une dimension axiale de 1 cm environ.

5. Turbomachine selon l'une des revendications précédentes, **caractérisée en ce que** le déflecteur annulaire (90) est formé en saillie sur le flasque annulaire (26) du diffuseur et s'étend axialement vers l'amont jusqu'à proximité du rouet (36).

6. Turbomachine selon la revendication 5, **caractérisée en ce que** le déflecteur annulaire (90) est formé à la jonction (29) entre une partie radiale (28) et une partie cylindrique (30) du flasque du diffuseur.

7. Turbomachine selon l'une des revendications précédentes, **caractérisée en ce qu'**elle comprend un déflecteur annulaire (80') formé en saillie sur la face aval (70) du rouet et un déflecteur annulaire (90') formé en saillie sur le flasque annulaire aval (26) du diffuseur, ces déflecteurs s'étendant l'un vers l'autre et délimitant entre eux un passage annulaire de sortie de l'air prélevé en sortie du compresseur.

8. Turbomachine selon la revendication 7, **caractérisée en ce que** le déflecteur annulaire (80') formé sur le rouet (36) est situé radialement à l'intérieur du déflecteur annulaire (90') formé sur le flasque annulaire (26) du diffuseur.

9. Turbomachine selon la revendication 1, **caractérisée en ce que** le déflecteur annulaire (100) formé sur le bouclier s'étend au niveau de la jonction (29) entre des parties radiale (28) et cylindrique (30) du flasque du diffuseur.

10. Turbomachine selon l'une des revendications précédentes, **caractérisée en ce que** le déflecteur annulaire (80, 90, 80', 90', 100) a une forme carrée, rectangulaire ou triangulaire en section axiale.

## Patentansprüche

1. Turbomaschine, enthaltend einen Zentrifugalverdichter (10) und einen ringförmigen Diffusor (12), der am Ausgang des Verdichters angeordnet ist, wobei der Diffusor einen stromabwärtigen, ringförmigen Flansch (26) mit im Wesentlichen L-förmigem Querschnitt aufweist, der sich einem Rad (36) des Verdichters nachgelagert erstreckt und mit einer stromabwärtigen, radialen Fläche (70) des Rads einen ringförmigen Hohlraum (40) eingrenzt, der durch Luftentnahme am Ausgang des Verdichters belüftet wird, wobei die entnommene Luft in den Hohlraum Richtung stromabwärts und zur Drehachse des Verdichters hin zirkuliert, wobei zumindest ein ringförmiger Abweiser (80, 90, 80', 90', 100) in diesem Hohlraum gelagert ist und sich zwischen der stromabwärtigen Fläche des Rads und dem stromabwärtigen, ringförmigen Flansch des Diffusors erstreckt, um das Mitnehmen von abgelenkter Heißluft in Richtung stromabwärts zu bewirken, **dadurch gekennzeichnet, dass**:
- sie einen ringförmigen Schild (102) zum Wärmeschutz enthält, der die stromabwärtige Fläche (70) des Rads überdeckt, und dass
- der ringförmige Hohlraum (40) einen Umwälzungsbereich (72) für die Luft definiert,
- und zum Unterbinden eines Luftanstiegs von erhitzter Luft entlang der stromabwärtigen Fläche des Rads über den ringförmigen Abweiser (80, 90, 80', 90', 100) hinaus der Abweiser radial im Bereich der Verbindung zwischen einem radialen stromaufwärtigen Abschnitt (28) und einem zylindrischen, stromabwärtigen Abschnitt (30) des ringförmigen Flansches des Diffusors liegt, oder der Abweiser an dem ringförmigen Wärmeschutzschild (102) vorspringend ausgebildet ist, wobei dieser Abweiser sich stromabwärts bis in die Nähe des Flansches (26) des Diffusors erstreckt.

2. Turbomaschine nach Anspruch 1, **dadurch gekennzeichnet, dass** der ringförmige Abweiser (80) an der stromabwärtigen Fläche (70) des Rads vorspringend ausgebildet ist und eine im Wesentlichen zylindrische Form hat.

3. Turbomaschine nach Anspruch 2, **dadurch gekennzeichnet, dass** der ringförmige Abweiser (80) sich axial bis in die Nähe des ringförmigen, stromabwärtigen Flansches des Diffusors erstreckt.

4. Turbomaschine nach Anspruch 2 oder 3, **dadurch gekennzeichnet, dass** der ringförmige Abweiser (80) eine axiale Abmessung in etwa von 1 cm hat.

5. Turbomaschine nach einem der vorangehenden Ansprüche, **dadurch gekennzeichnet, dass** der ringförmige Abweiser (80) an dem ringförmigen Flansch (26) des Diffusors vorspringend ausgebildet ist und sich axial Richtung stromaufwärts bis in die Nähe des Rades (36) erstreckt.

6. Turbomaschine nach Anspruch 5, **dadurch gekennzeichnet, dass** der ringförmige Abweiser (90) an der Verbindung (29) zwischen einem radialen Abschnitt (28) und einem zylindrischen Abschnitt (30) des Flansches des Diffusors ausgebildet ist.

7. Turbomaschine nach einem der vorangehenden Ansprüche, **dadurch gekennzeichnet, dass** sie einen ringförmigen Abweiser (80') aufweist, der an der stromabwärtigen Fläche (70) des Rades vorspringend ausgebildet ist, sowie einen ringförmigen Abweiser (90'), der am stromabwärtigen, ringförmigen Flansch (26) des Diffusors vorspringend ausgebildet ist, wobei diese Abweiser sich aufeinander zu erstrecken und zwischen sich einen ringförmigen Durchlass zum Austritt von am Ausgang des Verdichters entnommener Luft eingrenzen.

8. Turbomaschine nach Anspruch 7, **dadurch gekennzeichnet, dass** der am Rad (36) ausgebildete, ringförmige Abweiser (80') radial innerhalb des ringförmigen Abweisers (90') liegt, der am ringförmigen Flansch (26) des Diffusors ausgebildet ist.

9. Turbomaschine nach Anspruch 1, **dadurch gekennzeichnet, dass** der an dem Schild ausgebildete, ringförmige Abweiser (100) sich im Bereich der Verbindung (29) zwischen dem radialen Abschnitt (28) und dem zylindrischen Abschnitt (30) des Flansches des Diffusors erstreckt.

10. Turbomaschine nach einem der vorangehenden Ansprüche, **dadurch gekennzeichnet, dass** der ringförmige Abweiser (80, 90, 80', 90', 100) im axialen Schnitt eine quadratische, rechteckige oder dreieckige Form hat.

## Claims

1. A turbomachine comprising a centrifugal compressor (10) and an annular diffuser (12) arranged at the outlet of the of the compressor, said diffuser comprising a downstream annular flange (26) with a substantially L shaped section which extends axially from an impeller (36) of the compressor and which delimits by the downstream radial face (70) of the impeller an annular cavity (40) ventilated by taking air from the outlet of the compressor, the tapped-off air circulating downstream in the cavity and toward the axis of rotation of the compressor, at least one annular deflector (80, 90, 80', 90', 100) being mounted in this cavity and extends between the downstream face of the impeller and the annular downstream annular flange of the diffuser in order to lead the hot air downstream, **characterized in that**:- the turbomachine comprises an annular thermal protection shield (102) covering the downstream radial face (70) of the impeller, and **in that**
- the annular cavity (40) defines an air recirculation area (72),
- and, to oppose above the annular deflector (80, 90, 80', 90', 100) to a return of heated gas along the downstream face of the impeller, said deflector is radially arranged at the level of the junction between an upstream radial part (28) and downstream cylindrical part (30) of the annular flange of the diffuser, or the deflector is formed as a protrusion on the annular thermal protection shield, said deflector extending downstream near the flange (26) of the diffuser.

2. A turbomachine as claimed in claim 1, the annular deflector (80) is formed as a protrusion on the downstream face (70) of the impeller and has a substantially cylindrical shape.

3. A turbomachine as claimed in claim 2, wherein the annular deflector (80) extends axially near to the annular downstream flange of the diffuser.

4. A turbomachine as claimed in claim 2 or 3, wherein the annular deflector (80) has an axial dimension of approximately 1 cm.

5. A turbomachine as claimed in one of the preceding claims, which comprises an annular deflector (90) formed as a protrusion on the annular flange (26) of the diffuser and extending axially upstream to near the impeller.

6. A turbomachine as claimed in claim 6, wherein the annular deflector (90) is formed at the junction (29) between a radial portion (28) and a cylindrical portion (30) of the flange of the diffuser.

7. A turbomachine as claimed in one of the preceding claims, which comprises a deflector (80') formed as a protrusion on the downstream face (70) of the impeller and a deflector (90') formed as a protrusion on the annular downstream flange (26) of the diffuser, these deflectors extending toward one another and delimiting between them an annular outlet passageway for the air taken from the outlet of the compressor.

8. A turbomachine as claimed in claim 7, wherein the deflector (80') formed on the impeller (36) is located radially inside the annular deflector (90') formed on the annular flange (26) of the diffuser.

9. A turbomachine as claimed in claim 1, wherein the annular deflector (100) formed on the shield extends to the junction (29) between the radial portion (28) and cylindrical portion (30) of the flange of the diffuser.

10. A turbomachine as claimed in one of the preceding claims, wherein the annular deflector (80, 90, 80', 90', 100) has a square, rectangular or triangular shape in axial section.
